# EUROPEAN PATENT APPLICATION

(11) **EP 3 343 538 A1**
(43) Date of publication of application: **04.07.2018**
(21) Application number: 16839690.1
(22) Date of filing: 08.08.2016
(51) Int. Cl.: G09B 23/26, B82B 3/00

(54) **SET FOR THE NANO-SCALE MODELLING OF CRYSTAL STRUCTURES TO PRODUCE OPEN-TYPE MODELS**

(30) Priority: 24.08.2015 RU 2015135622
(71) Applicant: Joint Stock Company "The Research - and - Production Enterprise "Radiy", Moscow, 125057 (RU)
(72) Inventor: PANTYUKHOV, Sergej Vasil'evich, Moscow, 124460 (RU)
(74) Representative: Röthinger, Rainer
(86) International application number: PCT/RU2016/000520
(87) International publication number: WO 2017/034439

(57) **Abstract**

The invention relates to visual teaching aids. The present set comprises a base (1); one or more vertical stays (2) for mounting on said base; a set of flat transparent plates (3) to be mounted on said stays, said plates imitating crystallographic planes; spacers (4) for mounting on the stays between the plates (3); and a plurality of elements (5) for imitating atoms or ions. An element (5) comprises a pair of identically sized ball segments, at least one of which contains a magnet, the other segment also containing a magnet or a soft magnetic material. The set is characterized in that all of the plates (3) are identical and have no holes except for the holes for the stays, and is further characterized by the presence of templates, stencils and transparencies and by the design of the elements (5). The technical result is that the set is simple and easy to use, the models can be easily transformed, and the total number of crystal structures which can be modelled using the set can be increased without increasing the number and type of transparent plates.

## Description

### Field

The invention relates to visual training aids for demonstration purposes and to scientific apparatuses designed for visualizing spatial morphology or structure of crystalline materials, in particular, to three embodiments of a set for modelling various types of crystal structures, which enables producing open-type models simulating atomic or ionic sizes and interatomic or interionic distances direct to scale with respect to a real-world nanostructure.

### Background

Known are various approaches to the design of materials' crystal morphology models. In spite of the variety of such models, they may be classified into two major groups: "closed" and "open" (ref. to: Deane K. Smith. Bibliography on Molecular and Crystal Structure Models. U.S. department of commerce. National bureau of standards. National Bureau of Standards Monograph 14. Issued May 20, 1960 [1]).

In the "closed" models, the elements, usually being spheres (sometimes, truncated) or polyhedrons that simulate atoms or ions constituting a crystal, almost completely fill the space, i.e. are arranged such as to provide for their contact along their surface boundaries or along the sectional (cutting) planes.

Fixed relative positions of the elements contacting each other are achieved in various ways, such as by conferring adhesive properties to their surfaces (ref. to Japanese Patent Application No. 2005-292392, published 20.10.2005 [2]). Such models might have certain specific advantages; however, they are deficient in visual clarity due to their being overloaded and of "closed" nature, and not allowing either observing or measuring interionic or interatomic distances. They are primarily intended for illustrating the appearance of a crystal lattice, a crystal structure, or a nature of a particle packing within a crystal; however, they mispresent either atomic (ionic) sizes, or interatomic (interionic) distances, or both.

The "open" models include primarily the sphere and rod models (ref. to, for example: Potapov, V.M. Stereokhimiya. Moskva, Izd. "Khimiya", 1988, p. 10-11 (Potapov, V.M. Stereochemistry. Moscow, Khimiya Publishing House, 1988, p. 10-11) [3]; British Patent No.1144851, published 12.03.1969 [4]).

In such models, the elements simulating atoms or ions constituting a crystal are sized and distanced such as to allow unobstructed observation of their relative positioning and measuring the distances between them. It is an important advantage of the "open-type" models. The models of this type also largely vary in design. The most common are the models including spherical elements that simulate atoms and ions constituting a crystal and rod-shaped elements that couple the spheres and are oriented in accordance with the crystal lattice geometry, thus allowing for three-dimensional representation of a crystal structure.

However, such models are not sufficiently convenient either for use or from the technological point of view. To preserve correct representation of the relative positioning of atoms or ions when using the model, the model has to be mechanically fixed to prevent any rotation around the rod couplings. This makes assembling a spatial rod-connected structure, while preserving the correct relative positioning of the elements, very labor-intensive. Such models are not easy to produce, even where a model of the same crystal is to be replicated. Nevertheless, such models are the most common. For the above reasons, they are quite often available for sale not in the assembled form, but as a set of spheres and rods for a user to assemble. However, such implementation as a set provides much more opportunities for demonstrating and studying crystal structures of not only individual materials, but also of the whole classes. However, when manufacturing such sets, it is not easy to produce holes in the spheres to insert the ends of the coupling rods, since several holes may have to be made in each sphere, spatially oriented at certain angles to each other. Known are the inventions dedicated specifically to the means for making such holes (ref., for example, to the above patent **[4],** describing a device for ensuring an acceptable accuracy of producing such holes in the spheres, which are oriented as required). Furthermore, the "range" of spheres in such sets has to be very wide, since the atoms of a single chemical element within crystalline structures of different materials may be positioned differently with respect to each other, and, therefore, the holes in the spheres simulating them have to be located differently.

A technical approach under Japanese Patent No. 2642910 (published 20.08.1997) **[5]** may also be classified as a set for assembling "open-type" models. The approach includes multiple frames to be arranged on vertical posts at various levels such as to adjust the height of their position. Furthermore, rails with longitudinal cuts, configured to be repositioned horizontally, are installed on the frames. Parts for attaching the elements simulating the particles that constitute a crystal are movably installed in the above cuts. Overall, if available in sufficient number, the above structural components of the device and their moving capabilities allow installing any element, simulating a particle included in a crystal, into substantially any position within a space defined by the model's overall dimensions. The above elements installed in the rails' cuts are further configured to adjust the height, i.e. the distance to the rail, of positioning of the element simulating a particle included in a crystal. In this way, less frames to be installed on the vertical posts may be used. In such a set, where the particles constituting the crystal are configured as spheres, there is no such issue as the need to make in the spheres any holes oriented in a specific manner with respect to each other. However, as is obvious from the above, the structure of the set of elements is rather complex.

US Patent No. 4014110 (published 29.03.1977) **[6]** describes a more convenient set. When using such set, three-dimensional spherical elements simulating atoms or ions are arranged on vertical rods that are installed on a base. The number of the rods and their relative positioning geometry are selected such as to allow for positioning multiple spheres simulating atoms or ions of a specific material's crystal at different heights. Such set is also suitable for producing models illustrating close packing of particles within a crystal, if rather losing their visual clarity advantage, as the models become closed. Similar to the above set, this set does not have the issue of making holes in the spheres, which are oriented in a specific manner with respect to each other, since a single diametric hole in each sphere is enough; however, this set is much simpler in its design than the previous one.

The disadvantages of such a set include the presence of the rods hiding the atomic crystal structure and giving the impression that there are some special vertical bonds between the atoms (ions) in the crystal structure. Furthermore, no structures with relatively small interatomic distances in the horizontal projection plane may be modeled, if the radius of a sphere attached onto a rod is greater that the distance to a neighboring rod, the latter turning from a technological element into an irremovable hindrance. Furthermore, where various spheres substantially different in size have to be arranged at the same vertical line, any rod, whose thickness is to be less than the smallest sphere's diameter, may be too thin to be sufficiently hard and stable to arrange on it all spheres at this vertical line. To address these issues, different scales might have to be used to represent interatomic distances and atomic sizes, i.e. adequacy of the model may have to be degraded. There are also technological issues due to the need to precisely attach each sphere individually at a specified height.

RF Utility Patent No. 119504 (published 20.08.2012) **[7]** and RF Invention Patent No.2494466 (published 29.09.2013) **[8]** also disclose crystal structure models. Such models comprise three-dimensional elements simulating atoms or ions of a crystal structure being modeled. The elements are arranged on multiple flat transparent constant-thickness plates, arranged parallel to each other and simulating crystallographic planes of the crystal structures being modeled. Each of these elements may be configured as two identical spherical segments to be arranged symmetrically to each other at the opposite sides of the plate and coupled to each other via a pin passing through a hole in the plate. The plates are arranged in parallel to each other by means of vertical posts that may be fixed on the base and pass through the holes at the plates' ends and by means of spacers in the form of sleeves that are fitted onto the posts. The number of the plates and the elements arranged on them is such that in combination they simulate at least one elementary cell of the structure being modeled.

The plurality of the elements of each of the devices under the patents **[7]**, **[8]** may be regarded as a set for modeling various crystal structures to produce open-type models. Such set includes a plurality of flat transparent constant-thickness plates with holes. The number and relative positioning configuration, as well as the distances between the holes at each plate, are selected based on the plurality of crystal structures that may be modeled, while taking into account the need to visualize the relative positioning of atoms or ions in the parallel crystallographic planes in each of the structures to be modeled. The set further comprises a plurality of the above pairs of spherical segments with pins. In addition, the set comprises a base and one or more vertical posts to be installed on it with a plurality of separating sleeves enabling horizontal arrangement of the plates on the posts at various distances from each other.

The approach closest to the approach according to all the embodiments of the present invention is a set for modeling crystal structures, where the modeling principle according to the patents **[7]** and **[8]** is used. An obvious advantage of the models produced based on that principle is that they are scaled, i.e. simulate or represent a real-world crystal nanostructure (both the atomic or ionic sizes and the interatomic or interionic distances) to a specified strict scale.

However, the manufacture and practical use of such set is complicated due to the need to have a plurality of different flat transparent plates (and, therefore, the need to manufacture such plurality of plates, to store it, and to search for the required plate during the work) with holes whose number, relative positioning configuration and distances to each other are to correspond to the relative positioning of the atoms or ions in the crystallographic planes of each specific structure to be modeled true to scale. Another disadvantage of such set is that it must include multiple separating sleeves of various sizes to enable arrangement of plates horizontally on the posts at various distances from each other corresponding to both the naturally occurring and synthesized variety of crystal structures and the respective interplanar spacing in the structures to be modeled. Finally, fixing the spherical segments on the plates via the pins, while providing for repeated installation of the segments during the model assembling and transformation, i.e. transitioning from one model to another, is very inconvenient and complicated even with a small number of such elements in an elementary cell of a structure being modeled.

### Summary of the Invention

The technical result of the present invention in all its embodiments is to provide for the ease and convenience of use of the set and for an easy transformability of the models and to increase the plurality of crystal structures that can be modeled without increasing the number or types of the transparent plates on which the elements simulating atoms or ions are to be arranged, to simplify the plate design via manufacturing them completely identical and without any holes for installing the elements simulating atoms or ions, while eliminating the need to fix each of such elements via pins, and to reduce the variety of sizes of the spacers used to install the plates on the posts.

In the below summary of the present invention according to each of the embodiments of the set and in the detailed description of the embodiments and the use of the set, reference may be made to further types of the technical results to be achieved.

A set for crystal structure modeling **according to the first embodiment of the present invention,** similar to the above closest analogous set, where the modeling principle according to patents **[7]** and **[8]** is implemented, comprises a base and one or more vertical posts to be installed on said base, and a kit of flat transparent constant-thickness plates to be installed on said posts, said plates simulating crystallographic planes of crystal structures to be modeled, each plate having holes at its edges for said posts in the number equal to the number of the posts. The set further comprises spacers to be installed on said posts between neighboring flat transparent plates and to provide, when assembling a model, for the arrangement of the plates in parallel to the base at the required distances from each other, and a plurality of differently sized and colored elements to simulate the atoms or ions included in crystal structures being modeled. Each of such elements comprises a pair of spherical segments of the same size and color to be arranged symmetrically to each other at different sides of a flat transparent plate.

To achieve the above technical result, in the present set **according to the first embodiment,** as distinct from the above closest known set, all flat transparent plates in the set are identical. One of each pair of sphere segments is configured as a permanent magnet or made from a non-magnetic material with a permanent magnet insert, while the other is made either entirely from a magnetically soft material, or as a permanent magnet, or from a non-magnetic material with a permanent magnet or magnetically soft material insert. The magnets of both sphere segments have a magnetization direction enabling a counter mutual orientation of the opposite poles of said magnets when arranging the spherical segments including them on said flat transparent plate. To form said spacers, the present set comprises a plurality of disks. The set further comprises templates, the number of templates being equal to the number of parallel crystallographic planes in the modeled crystal structures, with outlines of the holes for the posts or outlines following, in full or in part, the shape of the flat transparent plates' edges marked on them. The templates further have unique template-specific marking that represents the required positioning of the spherical segments in accordance with relative positioning of the centers of atoms or ions in the modeled crystal structures' crystallographic planes. The set according to the first embodiment further comprises a felt-tip pen for copying said marking onto the flat transparent plates when the latter are superposed onto the templates such that the plates' edges or holes match the outlines on the template.

(The element for simulating atoms or ions is described above in the terms as used in the permanent magnet technology, for example, ref. to: Postoyannyye Magnify. Spravochnik. Pod red. Yu.M. Pyatina. Moskva, "Energiya", 1980, 488 s*. (*Permanent Magnets. A Reference Book. Under the editorship of Yu.M. Pyatin. Moscow, Energiya, 1989, 488 pages*)* **[9].** These terms will also be used in the further description of the second and third embodiments of the present set).

Where the present set **according to the first embodiment** is configured as described, when assembling a model, the spherical segments of each pair being used to comprise an element simulating an atom or an ion, due to the effects of magnetic attraction forces, may be easily fixed symmetrically to each other at two sides of any of the flat transparent plates at locations pre-marked with the felt-tip pen. When one of the segments is being moved by hand along the plate, the other segment is simultaneously sliding symmetrically, being attracted to the first segment and pressed to the opposite side of the plate by the magnetic force. In this way, an element may be easily and conveniently installed to simulate an atom or an ion at the desired location on the plate. The elements may be as easily removed and replaced.

It is advantageous to locate each of said inserts in a spherical segment of an element for simulating an atom or ion, where the element includes such insert, on the side of the spherical segment base flat surface and flush with the surface, and to configure the insert as a cylinder with an axis oriented along the radius of the spherical segment, which is perpendicular to the spherical segment base, wherein, if an insert is configured as a permanent magnet, its magnetization direction is preferably axial or diametric. Such configuration is easy to produce and facilitates meeting the condition of providing for counter mutual orientation of the opposite poles of the spherical segments' magnets when arranging the spherical segments on a flat transparent plate.

By configuring the elements simulating atoms or ions as described above, not only the elements may be installed more easily, but also all flat transparent plates may be configured identical and having only the holes for the posts, thus eliminating the need to manufacture a large number of different plates corresponding to the total number of parallel crystallographic planes in all structures that can be modeled with a unique arrangement of the holes for each plate.

The plurality of the above interrelated features facilitates transformation of the models produced with the use of the present set. With all flat transparent plates in the set being identical and having only the holes for installing on the posts, the number of the plates may be small and may be based only on the number of crystallographic planes in an elementary cell of the structure, that can be modeled using the present set, which has the maximum number of such planes. When installing flat transparent plates onto the posts, identical disks may be used to form various spacers, thus eliminating the need to have multiple spacers sized in accordance with various specific distances between crystallographic planes of the crystal structures being modeled.

The present set **according to the first embodiment** may further include another one or more bases and one or more posts configured for installing on each of said plates. Thus, several different crystal structures may be modeled simultaneously, including structures of different types, and may be visually compared.

In one particular example, all said disks for forming the spacers may be of equal thickness. The latter may selected, for example, based on an acceptable error of representing the distances between crystallographic planes of the crystal structure being modeled.

In another particular example, the present set may comprise multiple kits of disks, the disks in each kit being of equal thickness. The first kit includes the disks of the smallest thickness, while the disks in each of the other kits have a thickness that is multiple of the disk thickness in the first kit, the multiplicity being different for different kits. In this way, the number of the disks used to form more lengthy spacers may be reduced, and the models may be assembled more quickly. The smallest thickness for the first kit disks may be selected, as in the preceding example, based on an acceptable error of representing the distances between crystallographic planes of the crystal structure being modeled.

The most advantageous number of the posts to be installed on the base and on which the plates are to be installed is two.

In one particular example, the set according to the first present embodiment may include a sponge for sponging off the marking lines drawn with the felt-tip pen. Herein, the set may be used without any extra means for this purpose.

New transparencies, as well as elements simulating atoms or ions, may be added as required to a set already in operation.

A set for crystal structure modeling **according to a second embodiment of the present invention,** similar to the above closest analogous set, where the modeling principle according to patents [7] and [8] is implemented, comprises a base and one or more vertical posts to be installed on said base, and a kit of flat transparent constant-thickness plates to be installed on said posts, said plates simulating crystallographic planes of crystal structures to be modeled, each plate having holes at its edges for said posts in the number equal to the number of the posts. The set further comprises spacers to be installed on said posts between neighboring flat transparent plates and to provide, when assembling a model, for the arrangement of the plates in parallel to the base at the required distances from each other, and a plurality of differently sized and colored elements to simulate the atoms or ions included in crystal structures being modeled. Each of the elements comprises a pair of spherical segments of the same size and color to be arranged symmetrically to each other at different sides of a flat transparent plate.

To achieve the above technical result, in the present set **according to the second embodiment,** as distinct from the above closest set, all flat transparent plates in the set are identical. One of each pair of sphere segments is configured as a permanent magnet or made from a non-magnetic material with a permanent magnet insert, while the other is made either entirely from a magnetically soft material, or as a permanent magnet, or from a non-magnetic material with a permanent magnet or magnetically soft material insert, the magnets of both sphere segments having a magnetization direction enabling a counter mutual orientation of the opposite poles of said magnets when arranging the spherical segments including them on a flat transparent plate. To form said spacers, the present set comprises a plurality of disks. The set further comprises stencils in the number equal to the number of parallel crystallographic planes in the modeled crystal structures and made from a transparent film. The stencils are shaped and sized identically to the flat transparent plates and have a unique stencil-specific plurality of holes arranged in accordance with the relative positioning of the atom or ion centers in the modeled crystal structures' crystallographic planes. The holes are configured to install in them the spherical segments, at their flat surfaces, for simulating atoms or ions, when the stencil is superposed onto a flat transparent plate.

Where the present set **according to the second embodiment** is configured as described, when assembling a model, the spherical segments of each pair being used to comprise an element simulating an atom or an ion may, due to the presence of magnetic coupling forces, be easily fixed symmetrically to each other with respect to any flat transparent plate at its both sides at the locations as defined by the arrangement of the holes in the stencil superposed onto the plate. When one of the segments is being moved by hand along the plate, the other segment is simultaneously sliding symmetrically, being attracted to the first segment and pressed to the opposite side of the plate by the magnetic force. In this way, an element may be easily and conveniently installed to simulate an atom or an ion at the desired location on the plate. The element may be as easily removed and replaced.

It is preferable to arrange each of the inserts in a spherical segment of an element for simulating an atom or ion, where the element includes such insert, on the side of the spherical segment base flat surface and flush with the surface, and to configure such insert as cylinder with an axis oriented along the radius of the spherical segment perpendicular to the segment's base, wherein, if an insert is configured as a permanent magnet, its magnetization direction is preferably axial or diametric. Such configuration is easy to produce and facilitates meeting the condition of providing for counter mutual orientation of the opposite poles of the spherical segments' magnets when arranging the spherical segments on a flat transparent plate.

By configuring the elements simulating atoms or ions as described above, not only the elements may be installed more easily, but also all flat transparent plates may be configured identical and having only the holes for the posts, thus eliminating the need to manufacture a large number of different plates corresponding to the total number of parallel crystallographic planes in all structures that can be modeled with a unique arrangement of the holes for each plate. A transparent stencil facilitates installation of said spherical segments at the plates' side opposite to the superposed stencil. When arranging the elements simulating atoms or ions on the plate is completed, the plate may be installed on a post (posts) at the required distance from the precedent plate via the spacers configured as disks and included in the set. With the stencil being removable upon completion of installation of the elements simulating atoms or ions of the crystal structure being modeled, observability of said elements within an assembled model with a large number of crystallographic planes in the crystal structure being modeled may be improved.

To allow assembling a model, including installation of the plates onto the posts, without removing the stencils (where a model comprises few plates, and the model structure observability degradation due to insufficient transparency of the stencils is insignificant), the stencils may have holes for the posts at locations where the outlines of the holes are marked.

The plurality of the above features facilitates transformation of the models created with the use of the present set. With all flat transparent plates in the set being identical and having only the holes for installing on the posts, the number of the plates may be small and may be based only on the number of crystallographic planes in an elementary cell of the structure, that can be modeled using the present set, which has the maximum number of such planes. When installing flat transparent plates onto the posts, identical disks may be used to form various spacers, thus eliminating the need to have multiple spacers sized in accordance with various specific distances between crystallographic planes of the crystal structures being modeled.

The set according to the second embodiment, as distinct from the first one, comprises stencils, which are more difficult to manufacture, instead of templates. However, a stencil is more easy to use, since it is not necessary to copy the marking from the templates onto the plates with a felt-tip pen. Furthermore, the stencils made from a transparent film are not very complex elements and may be manufactured by a known die-cut printing method.

The present set **according to the second embodiment** may further include another one or more bases and one or more posts configured for installing on each of said plates. Thus, several different crystal structures may be modeled simultaneously, including structures of different types, and may be visually compared.

In one particular example, all said disks configured for forming spacers may be of equal thickness. The latter may be selected, for example, based on an acceptable error of representing in the model the distances between crystallographic planes of the crystal structure being modeled.

In another particular example, the present set may comprise multiple kits of disks, the disks in each kit being of equal thickness. The first kit includes the disks of the smallest thickness, while the disks in each of the other kits have a thickness that is multiple of the disk thickness in the first kit, the multiplicity being different for different kits. In this way, the number of the disks used to form more lengthy spacers may be reduced, and the models may be assembled more quickly. The smallest thickness for the first kit disks may be selected, as in the preceding example, based on an acceptable error of representing the distances between crystallographic planes of the crystal structure being modeled.

New stencils, as well as elements simulating atoms or ions, may be added as required to a set already in operation.

A set for crystal structure modeling **according to the third embodiment of the present invention,** similar to the above closest analogous set, where the modeling principle according to patents [7] and [8] is implemented, comprises a base and one or more vertical posts to be installed on said base, and a kit of flat transparent constant-thickness plates to be installed on said posts, said plates simulating crystallographic planes of crystal structures to be modeled, each plate having holes at its edges for said posts in the number equal to the number of the posts. The set further comprises spacers to be installed on said posts between neighboring flat transparent plates and to provide, when assembling a model, for the arrangement of the plates in parallel to the base at the required distances from each other, and a plurality of differently sized and colored elements to simulate the atoms or ions included in crystal structures being modeled. Each of the elements comprises a pair of spherical segments of the same size and color to be arranged symmetrically to each other at different sides of a flat transparent plate.

To achieve the above technical result, in the present set **according to the third embodiment,** as distinct from the above closest known set, all flat transparent plates in the set are identical. One of each pair of sphere segments is configured as a permanent magnet or made from a non-magnetic material with a permanent magnet insert, while the other is made either entirely from a magnetically soft material, or as a permanent magnet, or from a non-magnetic material with a permanent magnet or magnetically soft material insert, the magnets of both sphere segments having a magnetization direction enabling a counter mutual orientation of the opposite poles of said magnets when arranging the spherical segments including them on a flat transparent plate. To form said spacers, the present set comprises a plurality of disks. The set further comprises transparencies made from a transparent film in the number equal to the number of parallel crystallographic planes in the modeled crystal structures, and shaped and sized identically to said flat transparent plates, including the holes made in the latter for said posts. The transparencies have unique transparency-specific marking that represents the required positioning of the elements simulating atoms or ions according to the relative positioning of their centers in the modeled crystal structures' crystallographic planes.

Where the present set **according to the third embodiment** is configured as described, the transparencies remain on the plates after the elements simulating atoms or ions have being arranged on the plates and the plates have been installed on the posts. When assembling a model, the spherical segments of each pair being used to comprise an element simulating an atom or an ion may, due to the presence of a magnet in at least one of them, be easily fixed symmetrically to each other at two sides of any of the flat transparent plates with a transparency superposed onto it at locations as defined by its marking. When one of the segments is being moved by hand along the plate, the other segment is simultaneously sliding symmetrically, being attracted to the first segment and pressed to the opposite side of the plate by the magnetic force. In this way, an element may be easily and conveniently installed to simulate an atom or an ion at the desired location on the plate. The element may be as easily removed and replaced.

It is advantageous to locate each of said inserts in a spherical segment of an element for simulating an atom or ion, where the element includes such insert, on the side of the spherical segment base flat surface and flush with the surface, and to configure the insert as a cylinder with an axis oriented along the radius of the spherical segment, which is perpendicular to the spherical segment base, wherein, if an insert is configured as a permanent magnet, its magnetization direction is preferably axial or diametric. Such configuration is easy to produce and facilitates meeting the condition of providing for counter mutual orientation of the opposite poles of the spherical segments' magnets when arranging the spherical segments on a flat transparent plate.

By configuring the elements simulating atoms or ions as described above, not only the elements may be installed more easily, but also, either in this embodiment, or in the other embodiments of the present set, all flat transparent plates may be configured identical and having only the holes for the posts, thus eliminating the need to manufacture a large number of different plates corresponding to the total number of parallel crystallographic planes in all structures that can be modeled with a unique arrangement of the holes for each plate.

The plurality of the above features facilitates transformation of the models created with the use of the present set in this embodiment. With all flat transparent plates in the set being identical and having only the holes for installing on the posts, the number of the plates may be small and may be based only on the number of crystallographic planes in an elementary cell of the structure, that can be modeled using the present set, which has the maximum number of such planes. When installing flat transparent plates onto the posts, identical disks may be used to form various spacers, thus eliminating the need to have multiple spacers sized in accordance with various specific distances between crystallographic planes of the crystal structures being modeled.

The present set **according to the third embodiment** may further include another one or more bases and one or more posts configured for installing on each of said plates. Thus, several different crystal structures may be modeled simultaneously, including structures of different types, and may be visually compared.

In one particular example, all said disks configured for forming spacers may be of equal thickness. The latter may be selected, for example, based on an acceptable error of representing the distances between crystallographic planes of the crystal structure being modeled.

In another particular example, the present set may comprise multiple kits of disks, the disks in each kit being of equal thickness. The first kit includes the disks of the smallest thickness, while the disks in each of the other kits have a thickness that is multiple of the disk thickness in the first kit, the multiplicity being different for different kits. In this way, the number of the disks used to form more lengthy spacers may be reduced, and the models may be assembled more quickly. The smallest thickness for the first kit disks may be selected, as in the preceding example, based on an acceptable error of representing the distances between crystallographic planes of the crystal structure being modeled.

The most advantageous number of the posts to be installed on the base and on which the plates are to be installed is two.

New transparencies, as well as elements simulating atoms or ions, may be added as required to a set already in operation.

### Brief Description of the Drawings

The present invention is explained with reference to the drawings showing:
- Fig. 1 shows a *NaCl* crystal model assembled from the parts of a set according to the first or second embodiment;
- Fig. 2 shows a *NaCl* crystal model assembled from the parts of a set according to the third embodiment;
- Fig. 3 shows *NaCl* crystal structure;
- Fig. 4 shows particular examples of configuring an element simulating atoms or ions;
- Fig. 5 shows a structural fragment of a model assembled from the parts of a set according to the first or second embodiment;
- Fig. 6 shows a structural fragment of a model assembled from the parts of a set according to the third embodiment;
- Fig. 7 shows the parts constituting the present set according to the first embodiment;
- Fig. 8 shows the parts constituting the present set according to the second embodiment;
- Fig. 9 shows the parts constituting the present set according to the third embodiment;
- Fig. 10 shows consecutive steps of using the parts of a set according to the first embodiment when assembling a model, the steps being related to the arrangement of the elements simulating atoms or ions on a flat transparent plate;
- Fig. 11 shows consecutive steps of using the parts of a set according to the second embodiment when assembling a model, the steps being related to the arrangement of the elements simulating atoms or ions on a flat transparent plate;
- Fig. 12 shows consecutive steps of using the parts of a set according to the third embodiment when assembling a model, the steps being related to the arrangement of the elements simulating atoms or ions on a flat transparent plate;
- Fig. 13 is a photograph of a model of a fragment of a double-walled carbon nanotube at a scale of 100,000,000 : 1;
- Fig. 14 shows possible selections of parallel crystallographic planes when modeling structures with a cubic lattice.

### Detailed Description of Embodiments

As follows from the above summary of the invention, in all the described embodiments, the technical result is achieved via the design features of the present set's elements from which a model is assembled, in combination with the aspects of the means included in the set and used in the assembling process without becoming part of the model as such (except for the transparency in the set according to the third embodiment).

Before proceeding with the description of the present set and the process of producing a crystal structure model with the use of the set, it would be useful to overview the models that may be produced.

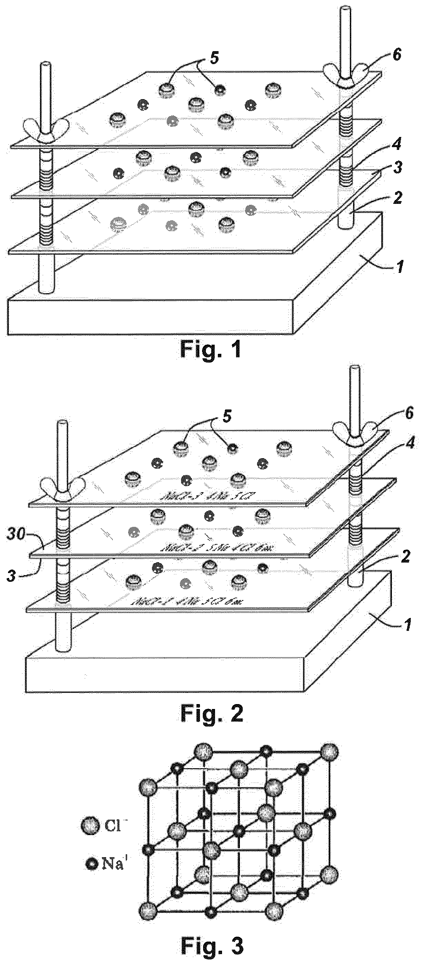

By using the present set according to the first and second embodiments, a one and the same model of a crystal structure as illustrated in Fig. 1 is produced, where a model of a sodium chloride *NaCl* crystal is shown by way of example. Its structure is shown in Fig. 3.

In the model of Fig. 1, the flat transparent plates 3 are arranged parallel to each other and to the base 1 on the posts 2. The plates are simulating parallel crystallographic planes of the crystal structure being modeled.

The elements 5, arranged on the plates, are simulating atoms or ions in accordance with the relative positioning of their centers in the structure being modeled and true to a selected scale, such as to represent at least one elementary cell of the structure being modeled. For a *NaCl* crystal, the three plates 3 shown in Fig. 1, with ten elements 5 simulating chlorine and sodium ions, are sufficient. The distances between the plates 3, defined by the total height of the plurality of disks 4 comprising the spacers, correspond, at the scale selected for modeling, to the distances between crystallographic planes in a crystal structure. All the disks may be of equal thickness that is selected based on the desired accuracy of modeling the distances between the crystallographic planes. In addition to such disks, disks with a thickness multiple of the above disks' thickness may be used, thus allowing, where necessary, to reduce the total number of the disks and to expedite the assembly. Positions of the plates 3 with the disks 4 between them in an assembled model may be fixed via the eared nuts 6, to which end the posts 2 are threaded.

By using the present set according to the third embodiment, a crystal structure model as illustrated in Fig. 2 is produced. This model is distinct from the model of Fig. 1 only in that the transparency 30 made from a transparent film is superposed onto each of the plates 3. The transparency is used as a means to ensure correct positioning of the elements 5 on the plates 3 during the assembly and remains as part of an assembled model. Similar to the model of Fig. 1, the plates 3 are simulating crystallographic planes of the crystal structure being modeled.

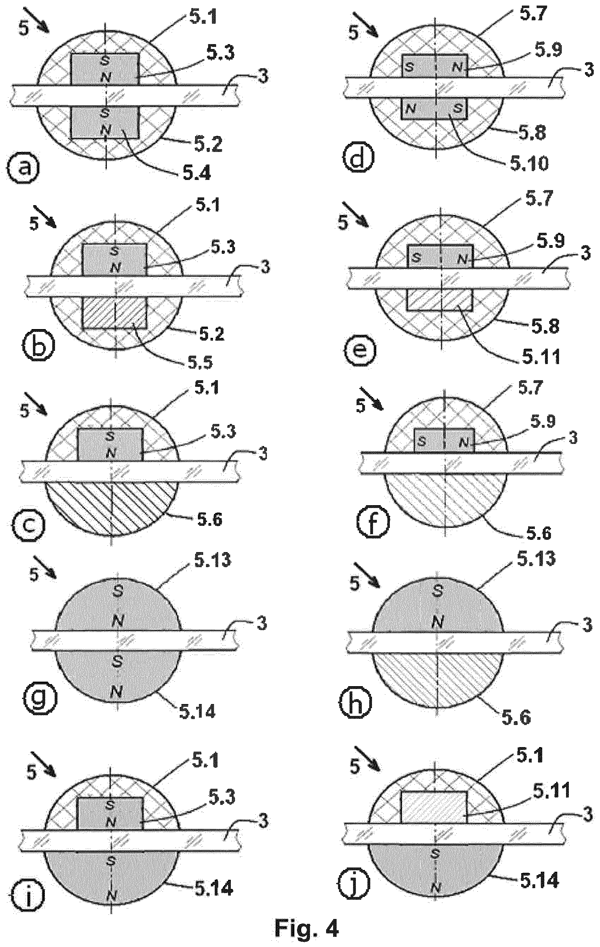

The design of the elements 5 simulating atoms or ions is identical in the three embodiments of the present set and is shown in Fig. 4 for several particular examples. In all particular examples (Fig. 4a, b, c, d, e, f, g, h), the element 5 comprises two spherical segments (5.1 and 5.2; 5.1 and 5.2; 5.1 and 5.6; 5.7 and 5.8; 5.7 and 5.8; 5.7 and 5.6; 5.13 and 5.14; 5.13 and 5.6, respectively). The element 5 is shown in the drawings installed on the transparent plate 3, the flat surfaces of the spherical segments included in the element being in contact with each side of the plate. Fig. 4a 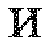 Fig. 4d show examples where both spherical segments have inserts configured as cylindrical magnets (5.3, 5.4 and 5.9, 5.10, respectively); Fig. 4b and Fig. 4e show examples where one spherical segment has an insert configured as a cylindrical magnet (5.3 and 5.9, respectively), and the other has an insert made from a magnetically soft material (5.5 and 5.11, respectively); Fig. 4c and Fig. 4f show examples where one spherical segment includes an insert configured as a magnet (5.3 and 5.9, respectively), and the other spherical segment (5.6) does not have an insert and is made entirely from a magnetically soft material; Fig. 4g shows an example where both spherical segments (5.13 and 5.14) are magnets; Fig. 4h shows an example where the upper spherical segment (5.13) is a magnet, and the lower (5.6) is made entirely from a magnetically soft material. All the above inserts (5.3, 5.4, 5.5, 5.9, 5.10, 5.11) are installed in the spherical segments on the side of their flat bases and flush with the surface of the latter. In all the inserts configured as cylinder-shaped magnets (5.3, 5.4, 5.9, 5.10), the cylinder axis is oriented along the radius of the respective spherical segment, the radius being perpendicular to the plane of the segment's base (vertically as shown in the drawings). Orientation of the magnets from which the spherical segments 5.13 and 5.14 in Fig. 4c, h are made is the same.

Element 5 configurations in the two groups of examples in Fig. 4a, b, c and Fig. 4d, e, f, respectively, are distinct from each other in that in the former group the magnets (5.3, 5.4) have an axial magnetization direction, while in the latter group (magnets 5.9, 5.10) the magnets have a diametrical magnetization direction.

In the first group, the magnets 5.3 and 5.4 face, at one of their poles, the base of the spherical element in which they are inserted, i.e., when the element 5 is arranged on the plate 3, towards the plate and the second spherical segment positioned at the other side of the plate. Thus, in the element 5 of Fig. 4a, having magnets in both spherical segments 5.1, 5.2, the magnets in the segments are oriented towards each other with their opposite poles.

In the second group, the magnets 5.9, 5.10 have their poles at the opposite sides with respect to the axis of a cylinder in the form of which the magnets are configured. The drawings of Fig. 4d, e, f show the element 5 with such orientation of the magnets inserted in the spherical segments, with their poles at the right side and the left side with respect to the centerline (at the ends of the respective cylinder's diameter). When the element 5 of Fig. 4d, with the magnetic inserts in both spherical segments 5.7, 5.8, is arranged at the plate 3, the spherical segments will "automatically" assume a position with mutually opposite orientation of poles of the magnets 5.9, 5.10 in the segments. As such, in a "free" state, i.e. without any interaction, the two spherical segments of the element 5 in Fig. 4d are indistinguishable from each other.

In the spherical segments 5.13 and 5.14, configured as magnets, of the element 5 of Fig. 4g, the magnetization direction coincides with the segments' radii that are perpendicular to the segments' bases, the magnets being oriented towards each other with the respective opposite poles, same as in Fig. 4a.

In each of the examples shown in Fig. 4a, b, c, d, e, f, g, h and other possible particular examples consistent with the above description, the spherical segments of the element 5 are attracted to each other due to a magnetic coupling force and are pressed against the surfaces of the plate 3. In this way, the element 5 may be fixed at any required location on the plate 3 by arranging the element's spherical segments opposite one another at the opposite sides of the plate. When sliding one of the segments of the element 5 along the plate 3 surface, the other segment is sliding simultaneously and symmetrically, thus providing for easy and convenient installation of the element 5 in a desired location at the plate 3. The element may be removed and replaced as easily.

The maximum force pressing the spherical segments against the flat transparent plate 3 surfaces is provided in the particular examples illustrated in Fig. 4a, Fig. 4d, and Fig. 4g, where the element 5 comprises magnets in both spherical segments. Fixing the element 5 on the plate 3 according to Fig. 4d, e, f is distinct in that the magnetic circuit is closed (via the opposite poles of the magnets 5.9 and 5.10 facing each other in one particular example of Fig. 4d, or via the insert 5.11 from a magnetically soft material in the example of Fig. 4e, or directly via the lower spherical segment 5.6 made entirely from a magnetically soft material in the example of Fig. 4f).

The "range" of the spherical segment pairs, included in the set and different in size and color, has to be sufficient to simulate all types of atoms or ions occurring in the crystal structures for modeling of which a given set is configured to, while the number of the spherical segment pairs of each type has to be sufficient to model a crystal structure in which an elementary cell comprises the maximum number of identical atoms or ions of such type.

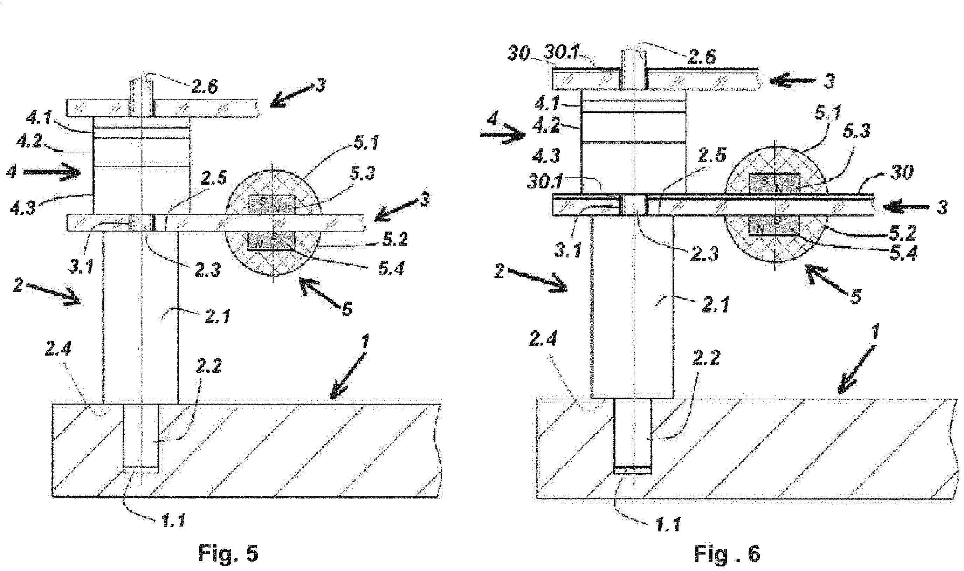

Figures 5 and 6 showing fragments of the assembled models of Figs. 1 and 2, respectively, provide a further explanation of how the above elements of the present set are interconnected and interacting. In the examples illustrated in Figs. 5 and 6, the post 2 is a rod with a middle portion 2.1 and two end portions 2.2, 2.3 less than the middle portion 2.1 in diameter and has flat stops 2.4, 2.5 at the boundaries between the above portions. The lower end portion 2.2 of the post 2 is tightly installed into a seat 1.1 in the base 1 and rests against it at its flat stop 2.4. The lower flat transparent plate 3 is positioned at a distance from the base 1, which is equal to the length of the middle portion 2.1 of the post 2, and rests against the flat stop 2.5 of the post 2. The upper end portion 2.3 of the post 2 extends through the holes 3.1 of both depicted plates 3 (in Fig. 6, that portion of the post extends also through the holes 30.1 of the transparencies 30). The distance between the neighboring plates 3 is defined by the total thickness of the disks 4. The drawing show how the plurality of disks 4.1, 4.2, 4.3 having different thicknesses is used. The upper end portion 2.3 of the post 2 may have a thread 2.6 for an eared nut as shown in Fig. 1 and Fig. 2. The element 5 for simulating atoms or ions is shown in Figs. 5 and 6, respectively, as a particular example embodiment illustrated in Fig. 4a, i.e. with magnetic inserts in both its spherical segments. Its parts, shown in Figs. 5 and 6, have the same reference numbers as in Fig. 4a.

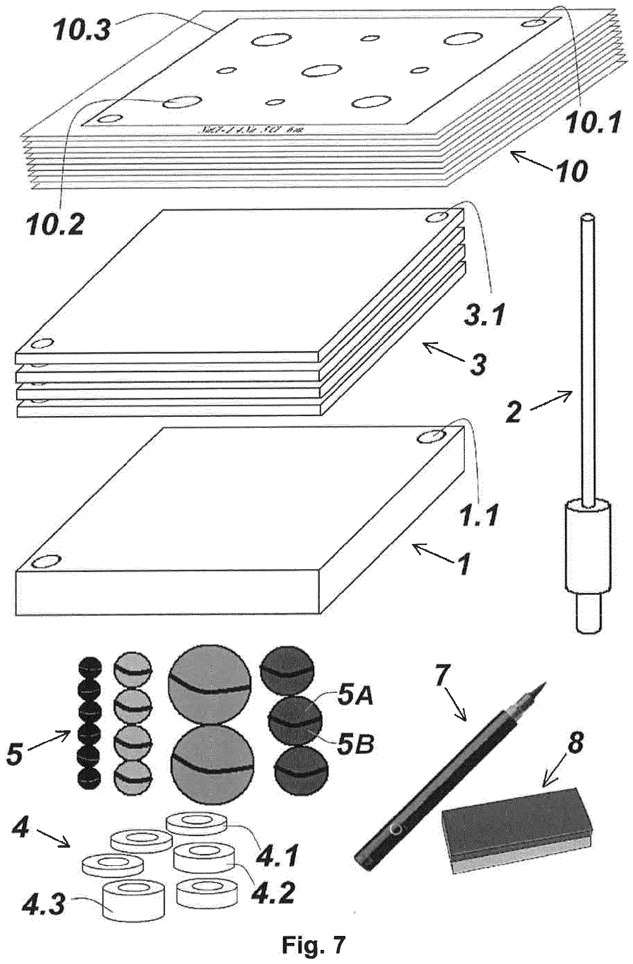

A set for crystal structure modeling **according to the first embodiment of the present invention** comprises (Fig. 7): a base 1, one or more posts 2 configured to be installed on the base, and a kit of constant-thickness flat transparent plates 3 configured to be installed on said posts. Each of the plates 3 has, at its ends, the holes 3.1 in the number equal to the number of posts 2. In the example shown in Fig. 6, the set is to comprise two posts 2 configured to be installed at the base 1, for which end the latter has seats 1.1. Accordingly, in this example each of the plates 3 has two holes 3.1 for installing them onto the posts 2. The set may include more posts or only one post, provided that there are sufficient numbers of holes at the peripheral portions of the plates 3 and of seats in the base 1. The most advantageous is the configuration of the plates 3 as shown in Fig. 6, i.e. with two holes, and that of the base 1 with two seats providing for the use of two posts, as in the model discussed above and shown in Fig. 1.

Reference number 5 in Fig. 7 denotes the elements included into the set according to the first embodiment to simulate atoms or ions of a crystal structure. Designations 5A and 5B show that each element 5 comprises two portions. As shown in Fig. 7, these portions, not having been included into a model yet, are coupled to each other. By sticking together due to magnetic forces, several joint elements may form strings.

Reference number 4 in Fig. 7 denotes the above mentioned disks configured to form spacers. In the particular example in Fig. 7, they have three gradations of thickness (disks 4.1, 4.2, 4.3).

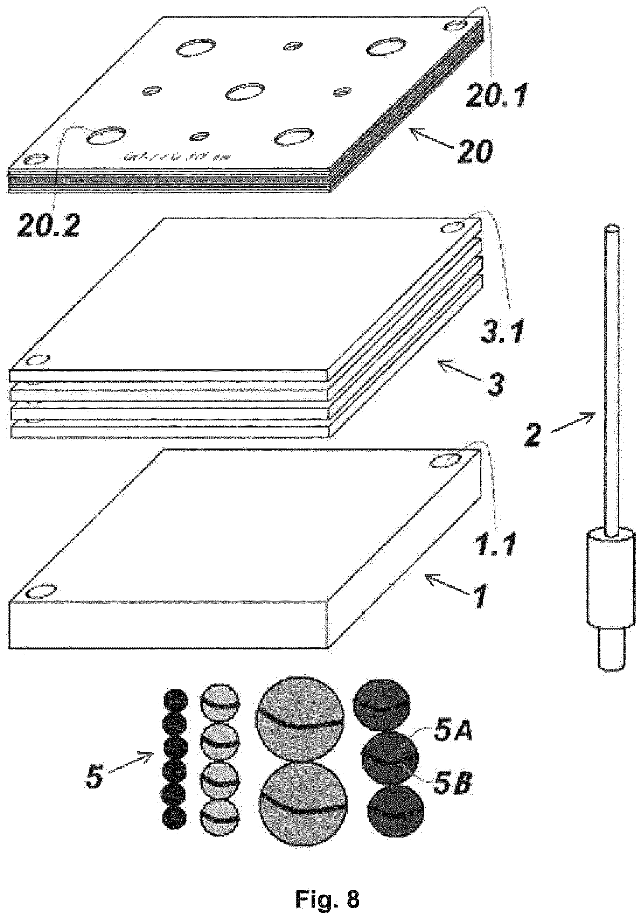

All the above parts of the present set according to the first embodiment are used in the structure of the models produced in accordance with Fig. 1, Fig. 5. Identical parts with identical reference numbers are included in the present set **according to the second embodiment** illustrated by Fig. 8. These parts of the set according to the second embodiment are also used in the structure of models produced according to Fig. 1, Fig. 5.

Otherwise, the sets according to the first and second embodiments are distinct.

The set according to the first embodiment, in addition to the above listed parts, includes a kit of templates 10, a felt-tip pen 6, and a sponge 7 for sponging off the images drawn with the felt-tip pen.

The kit of templates 10 includes templates in the number equal to the number of parallel crystallographic planes in the crystal structures to be modeled. All the templates 10 have outlines, identical for all the templates, drawn on them to follow, either completely or partially, the shape of the flat transparent plate 3 edges or the outlines of the holes 3.1 made in the plates 3 for the posts 2 (Fig. 7 shows both outlines, i.e. 10.3 and 10.1, respectively).

In addition to the above outlines, the templates 10 have unique template-specific marking to define the required locations to install the elements 5 simulating atoms or ions, observing the distances between them in accordance with the model scale and relative positioning of the atoms or ions whose centers are located in the same crystallographic plane of the crystal structure being modeled, the crystallographic plane being simulated by the plate 3 for which the given template is intended.

In one particular example shown in Fig. 7, the marking is configured as circumferences with diameters corresponding to the diameters of the spherical elements' bases in the elements 5 simulating atoms or ions with the centers located in the same crystallographic plane of the crystal structure being modeled. Such making enables, when subsequently using the templates (as described below), arranging the elements 5 with the maximum accuracy; however, the marking may be more simple, such as, defining the centers of the circumferences instead of the circumferences.

When assembling a model, the felt-tip pen is used to copy the above marking onto the plates 3 superposed on the templates such as to align their edges or holes with the respective outlines at the template.

The use of the templates and other parts of the set according to the first embodiment is elaborated below after the end of the description of the set compositions according to the second and third embodiments.

A set **according to the second embodiment,** as illustrated in Fig. 8, in addition the above described parts 1 - 5 identical to those of the set according to the first embodiment, comprises a kit of stencils 20 made from a transparent film. All the stencils are shaped and sized identically to the flat transparent plates 3. The stencils 20 have holes 20.2 positioned in accordance with the relative positioning of the atom or ion centers in a respective crystallographic plane of the crystal structure being modeled and true to scale with regard to the distances between them and atomic or ionic sizes. In one particular example, the stencils may further have holes for the posts 20.1. The stencil is configured for arranging the elements 5 on the plate 3, where a stencil 20 is superposed onto the plate, and the elements are installed at the locations as defined by the holes in stencil. The use of the stencils and other parts of the set according to the second embodiment is elaborated below after the end of the description of the set composition according to the third embodiment.

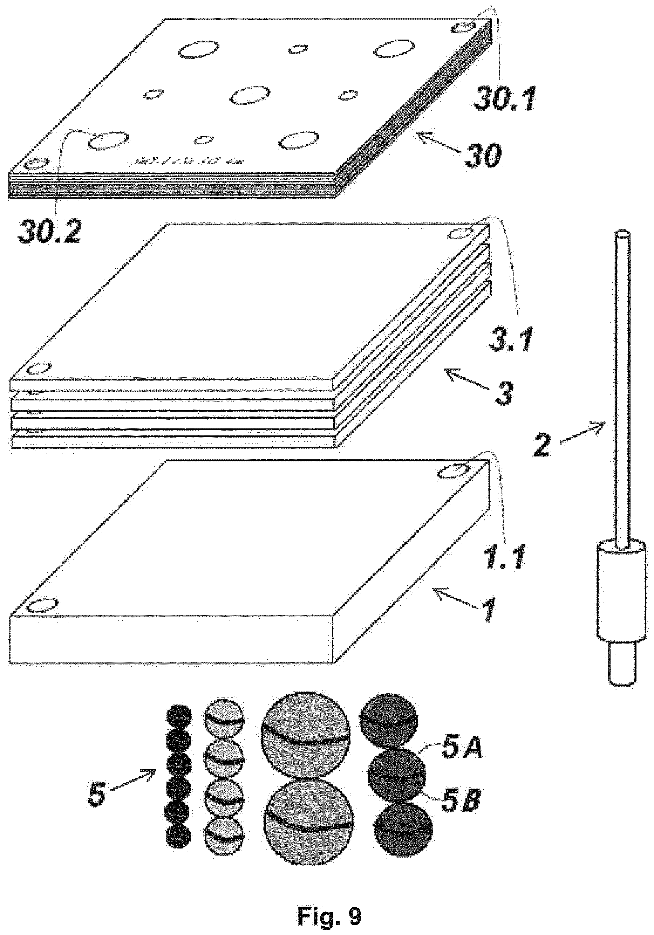

A set **according to the third embodiment** (Fig. 9) comprises the following parts configured identical to those of the sets according to the first (Fig. 7) and the second (Fig. 8) embodiments, such parts having the reference numbers similar to the above (including, in Fig. 2 and Fig. 6, to those related to the model assembled from the set according to the third embodiment): a base 1, posts 2, a kit of flat transparent plates 3, elements 5 to simulate atoms or ions of a crystal structure, disks 4 to form spacers.

In addition to the above elements that are common to the three sets, the set according to the third embodiment comprises a kit of transparencies 30. Transparencies 30 are similar to the stencils 20 in the set according to the second embodiment in that they are shaped and sized identically to the plates 3 and are made from a transparent film. However, instead of the holes 20.2 for the elements 5 in the stencils 20, the transparencies 30 in a set according to the third embodiment have unique transparency-specific marking similar to that of the templates in a set according to the first embodiment, showing the required locations to install the bases of the spherical segments of the elements 5 used to simulate atoms or ions whose centers in the crystal structure being modeled are located in the same crystallographic plane. In one particular example shown in Fig. 9, the marking is configured as circumferences with diameters corresponding to the sizes of the bases of the spherical segments of elements 5. However, the marking may be simpler, such as, defining the positions of centers of circumferences instead of the circumferences.

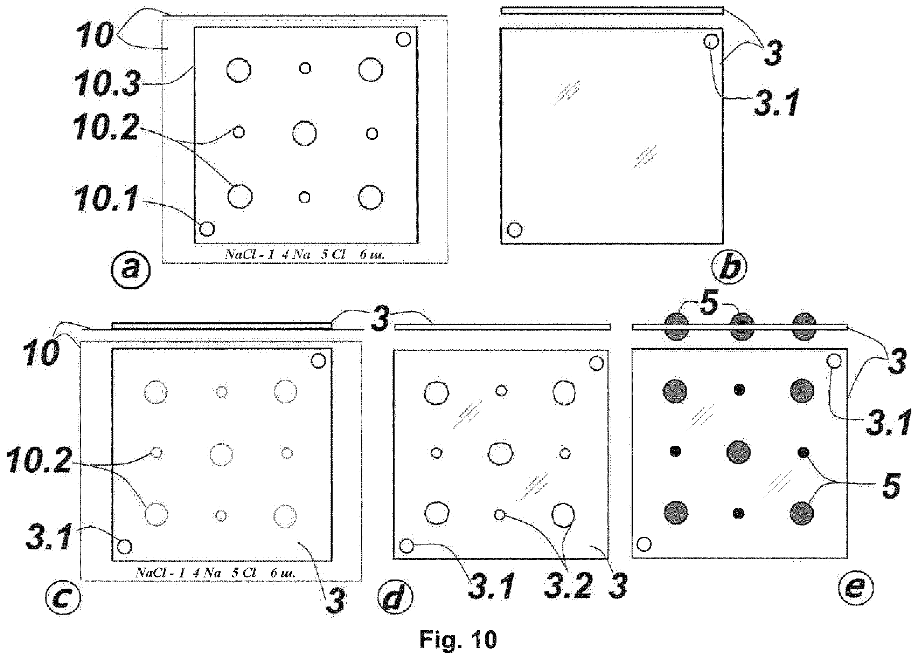

From the above discussion of Figs. 1, 2, 5, 6, it is apparent how a crystal structure model may be assembled from available flat transparent plates with the elements simulating atoms or ions pre-arranged on them. A sequence of steps for such arrangement using the sets composed as described above and shown in Figs. 7, 8, 9 will be explained below with reference to Figs. 10, 11, 12 showing two-dimensional views of the flat transparent plates 3, templates 10, stencils 20, and transparencies 30.

Where a set **according to the first embodiment** is used, to arrange the elements simulating atoms or ions on the plates, a plurality of templates configured for assembling a specific model is selected from the available kit of templates 10 (Fig. 7). Any information required to this end, such as the number of the crystal structure Fedorov space group, may be included into a set-specific user manual or may be indicated directly on the templates as shown in Fig. 7. Herein, the entire kit of templates included into the set may be configured, for example, as a catalogue or a sketch-book, where each page relates to one template, i.e. to a single crystallographic plane of a crystal structure to be modeled. The template's clear area may contain data, such as the serial number of the respective plate when it is installed on the posts 2 installed at the base 1, the types and number of the elements 5 simulating atoms or ions to be arranged on this plate or on the entire plurality of the plates in the given structure, the number of the disks to be fitted onto the posts 3 after the plate has been installed on them. Fig. 10a shows such template 10 for a *NaCl* crystal plane with the outlines 10.1, 10.2, 10.3, with an appropriate inscription in its lower portion. The plurality of outlines 10.2 forms the marking that defines the required locations to install the elements 5 simulating atoms or ions. Fig. 10b shows a flat transparent plate 3 with holes 3.1.

The plate 3, as shown in Fig. 10b, is superposed onto a template 10 to produce a combination thereof as shown Fig. 10c. The Figure shows the outlines 10.2, visible through the plate 3, of the images on the template 10 which is placed under the plate. The outlines are then traced with a felt-tip pen, and the plate is removed from the template. The plate 3 at this step is shown in Fig. 10d, where the outlines 3.2 drawn with a felt-tip pen are visible, the relative positioning of which corresponds to the required locations to install the elements simulating atoms or ions. The spherical segments of the elements 5 simulating atoms or ions are then installed one by one. After each of such elements has been installed onto the upper side of the plate 3, the second spherical segment of the respective element is installed beneath it at the lower side of the plate 3, fixation of both segments being ensured by their interattraction. As a result, a plate 3 is produced (Fig. 10e), ready to be installed onto the posts 2, as shown in Fig. 1. The disks are then fitted onto the posts 2 to form spacers 4 of the required height, which will separate the next plate from that already installed.

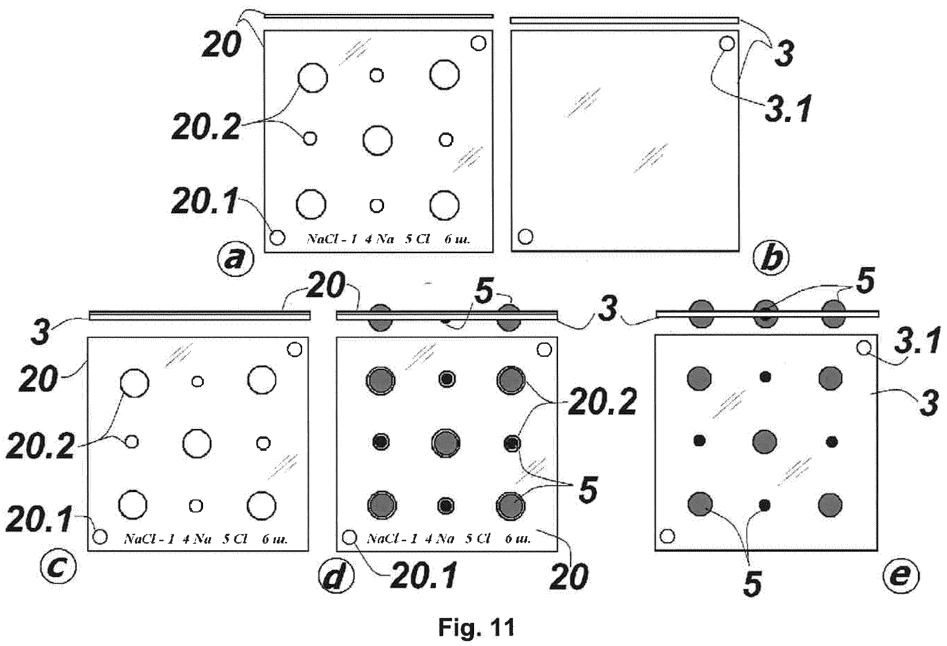

Where a set **according to the second embodiment** is used to arrange on the plates the elements simulating atoms or ions, a plurality of stencils is selected from the available kit of stencils 20 (Fig. 8) intended for assembling a specific model. Any information required to this end may be included into a set-specific user manual. However, the stencils may have directly on them such information, as the plurality of elements 5 simulating atoms or ions, to arrange which on a plate the stencil is intended for, or the total number of all elements on all plates of the structure to be modeled, and the serial number of such plate and the number of disks in spacers to be installed on the posts between that plate and the next one. Fig. 11a shows a stencil 20 for one of the *NaCl* crystal planes with the holes 20.1, 20.2, containing such information in a free area at its lower portion. In another particular example, such information may be provided in the set-specific user manual. Therein, the stencil contains only an identifying feature that may relate it to the information in the manual, or may not contain such feature either, such as where the stencils are arranged in appropriately marked cells of the set's packaging (this is also applicable to the transparencies according to the third embodiment of the present set).

Fig. 11b shows a flat transparent plate 3 with the holes 3.1. A stencil 20 is superposed on the plate to produce a combination thereof as shown in Fig. 11c. Spherical segments of elements 5 simulating atoms or ions are then installed one by one into the holes 20.2, i.e. onto the upper side of the plate 3. After each such element has been installed, its second spherical segment is installed beneath it at the lower side of the plate 3, fixation of both segments being ensured by their interattraction. After the last of the elements 5 has been installed, this preparatory step will be complete, and there will be a condition shown in Fig. 11d: the plate 3 has the stencil 20 superposed onto it and all the elements 5 corresponding to one of the crystallographic planes of the crystal structure being modeled installed on it. By removing the stencil 20, a plate 3 according to Fig. 11e is produced, with the elements 5 simulating atoms or ions installed in the required locations, ready for positioning on the posts 2, as shown in Fig. 1. Next, similar to a set according to the first embodiment, the disks 4 are fitted onto the posts 2 to form spacers of the required height, which will separate the next plate in sequence from the already installed plate.

In the example shown in Figs. 11a, c, d, the stencil 20, in addition to the holes 20.2 for arranging the elements 5, further has the holes 20.1 for the posts 2. Herein, if the number of plates 3 in the model being assembled is small, the stencil may be left on the plate after the elements 5 have been installed (since the stencil's limited transparency will not substantially affect the observability of the resulting model's structure), and the plate 3 may be deemed ready for installing (together with the stencil) onto the posts already at the step shown in Fig. 11d.

Where a set **according to the third embodiment** is used for arranging elements simulating atoms or ions at the plates, a plurality of transparencies is selected from the available kit of transparencies 30 (Fig. 9), the plurality being intended for assembling a specific model. Any information required to this end may be included, as discussed above, in the set-specific user manual or provided directly on the transparencies as may be seen in Fig. 9. The transparencies may have directly on them such information, as the plurality of elements 5 simulating atoms or ions, to arrange which on a plate the transparency is intended for, or the total number of all such elements on all plates of the structure to be modeled, and the serial number of such plate and the number of disks in spacers to be installed on the posts between that plate and the next one.

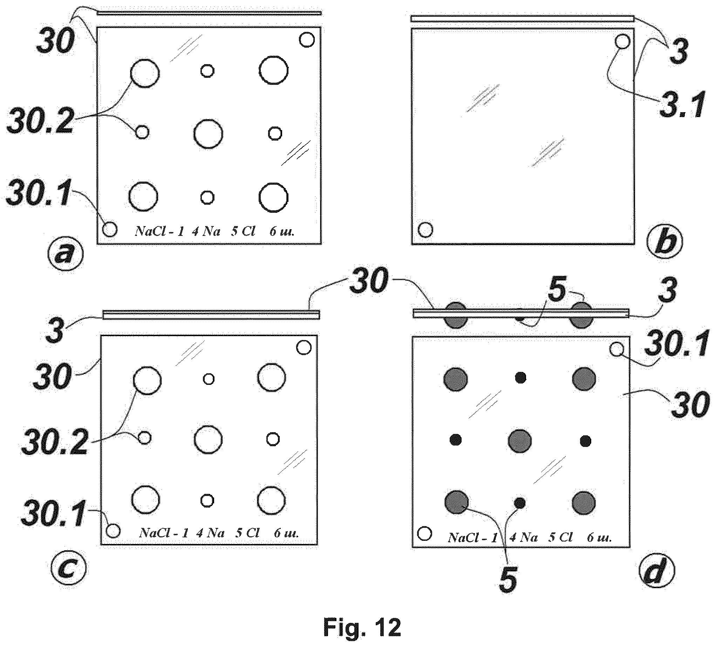

Fig. 12a shows a transparency 30 for one of the *NaCl* crystal planes with holes 30.1 for posts 2 and marking configured as circumferences 30.2 to indicate the required locations for installing spherical segments of elements 5 to simulate atoms or ions. Fig. 12b shows a flat transparent plate 3 with holes 3.1 for the posts. The transparency 30 is superposed onto the plate to produce a combination shown in Fig. 12c. The spherical segments of the elements 5 simulating atoms or ions are then installed one by one onto the upper side of the plate 3 at the locations marked by the circumferences 30.2. After each such element has been installed, the second spherical segment of the respective element is installed under it at the lower side of the plate 3, fixation of both segments being ensured by their interattraction. After the last of the elements 5 is installed, preparation of the plate will be complete, and there will be a condition shown in Fig. 12d: the transparency superposed onto the plate 3 and all the elements 5 corresponding to a crystallographic plane of the crystal structure being modeled installed on the plate 3.

The plate 3 of Fig. 12d, with the elements 5 simulating atoms or ions installed at the required locations, may be placed, together with the transparency 30 superposed onto it, on the posts 2, as shown in Fig. 2. Next, same as where the sets according to the first and second embodiments are used, the disks are fitted onto the posts 2, thus forming the spacers 4 of the required height, to separate the next plate with a transparency from the already installed one.

Table 1 provides an example composition of a set for modelling crystalline materials, as listed in the first column, at a scale as follows: 1cm corresponds to lA.

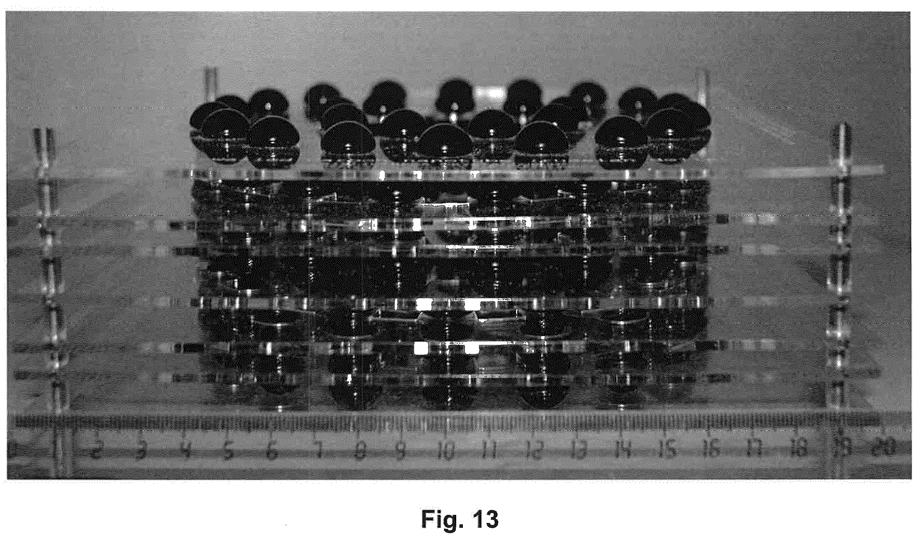

The photograph in Fig. 13 shows a model of a double-walled carbon nanotube fragment with the chirality indexes of {(9.0)+(18.0)}, configured at the scale of 100 000 000 : 1, where 1 Å in a real-world nanostructure corresponds to 1cm in the model. The external nanotube diameter is 14.1 Å, and that of the internal one is 7.05 Å, corresponding to 14.1cm and 7.05 cm in the present model. The internal nanotube comprises 45 carbon atoms, the external one comprising 90 carbon atoms. The elements simulating the carbon atoms are also configured at the above scale, their diameter being 1.4 cm. The length of the present nanotube fragment is 5.1 Å, corresponding to 5.1cm in the model. The model is assembled at seven flat transparent plates arranged, in this particular example, on four posts using 156 spacer disks of 1mm thickness. Each plate is 20cm x 20cm in size, corresponding to 20 Å x 20 Å in a real-world structure.

**Table 1**

| Crystalline material | Fedorov Group (Group Number) | Elements | | | | | Number of Plates | Number of Disks h=lmm |
|---|---|---|---|---|---|---|---|---|
| | | C | O | Na | S | Cl | | |
| C (diamond) | Fd-3m (227) | 18 | - | - | - | - | 5 | 72 |
| C (lonsdaleite) | P6₃/mmc (194) | 27 | | - | - | - | 5 | 84 |
| C (α-graphite) | P6₃mc (186) | 31 | - | - | - | - | 3 | 134 |
| C (β-graphite) | R-3m (166) | 44 | - | - | - | - | 4 | 200 |
| C (fullerene C60) | Fm-3m (225) | 60 | - | - | - | - | 8 | 134 |
| Cl | P4₂/ncm (138) | - | - | - | - | 16 | 6 | 122 |
| Cl | Cmca | - | - | - | - | 12 | 3 | 124 |
| | (64) | | | | | | | |
| CO | P2₁3 (198) | 14 | 14 | - | - | - | 9 | 112 |
| CO₂ | Pa-3 (205) | 14 | 28 | - | - | - | 9 | 112 |
| CO₂ | Pn-3 (201) | 4 | 8 | - | - | - | 8 | 112 |
| CO₂ | Pbcn (60) | 6 | 12 | - | - | - | 7 | 138 |
| Na | Im-3m (229) | - | - | 9 | - | - | 3 | 84 |
| Na | P6₃/mmc (194) | - | - | 17 | - | - | 3 | 124 |
| NaCl | Fm-3m (225) | - | - | 14 | - | 13 | 3 | 108 |
| Na₂CO₃ | P6₃/mmc (194) | 2 | 6 | 14 | - | - | 5 | 134 |
| Na₂O | Fm-3m (225) | - | 14 | 8 | - | - | 5 | 112 |
| Na₂O₂ | P-62m (189) | - | 12 | 15 | - | - | 7 | 90 |
| Na₂S | Fm-3m (225) | - | - | 8 | 14 | - | 5 | 130 |
| Na₂SO₃ | P-3 (147) | - | 6 | 14 | 2 | - | 9 | 122 |
| Na₂SO₄ | Fddd (70) | - | 32 | 32 | 16 | - | 14 | 196 |
| Na₂SO₄ | Pbnn (52) | - | 20 | 10 | 4 | - | 9 | 140 |
| O (γ-oxygen) | Pm-3n (223) | - | 64 | - | - | - | 12 | 136 |
| s | R-3m (166) | - | - | - | 24 | - | 4 | 52 |
| S | P3₂21 (154) | - | - | - | 18 | - | 12 | 144 |
| S | R-3 (148) | - | - | - | 24 | - | 8 | 86 |
| SO₂ | Aba2 (41) | - | 28 | - | 14 | - | 6 | 136 |
| SO₃ | P 12₁/c1 (14) | - | 16 | - | 4 | - | 6 | 124 |
| Total number in a set | | 60 | 64 | 32 | 24 | 16 | 14 | 200 |
| | | C | O | Na | S | Cl | Plates | Disks |
| | | Elements | | | | | | |

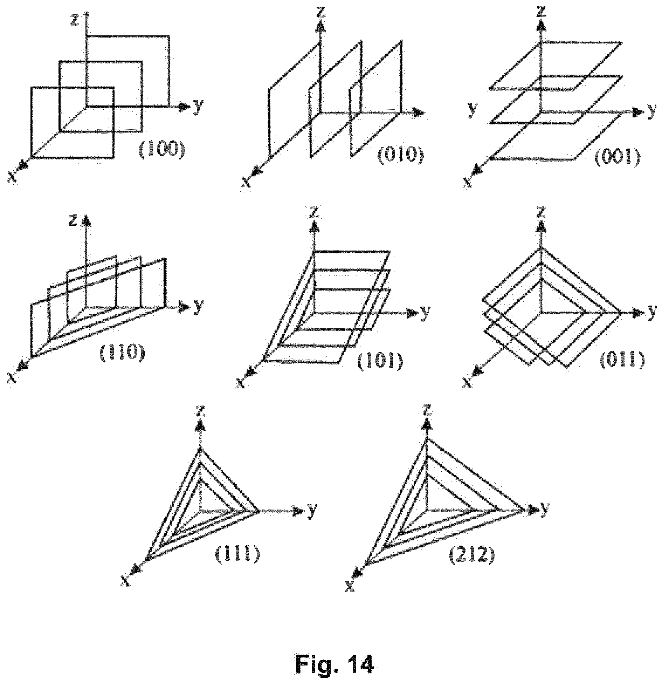

It should be noted as a common feature of the three present embodiments that, when designing a set, the selection of crystallographic planes to be simulated in the models via the flat transparent plates is not unique. For any crystal structure being modeled, at least one elementary cell of the crystal may be represented in the model via various pluralities of parallel plates corresponding to various combinations of the Miller indexes (h k 1). This governs both the number of transparent plates used in a specific model and the aspect view of the crystal structure represented by the model, which may affect the visual clarity of representing the structure's specific features. Each embodiment of the set facilitates producing models of one and the same structure corresponding to different combinations of the Miller indexes (h k 1) on which the parallel crystallographic plane selection is based, thus enabling representation of the above features of the crystal morphology and providing for their easy observability. Furthermore, various models of one and the same structure may be produced as described above via including appropriate templates, stencils, or transparencies with no need to have different plates in the set. Such capability is another technical result common to the three present embodiments of the set. In particular examples, where a set comprises additional bases or posts, two or more models of one and the same crystal structure corresponding to crystallographic planes with different Miller indexes (h k 1) may be produced simultaneously. The variety of the parallel crystallographic plane selections is illustrated in Fig. 14 showing such planes for cubic lattice crystal structures (A.V. Gurtov, R.N. Osaulenko. Fizika tverdogo tela dlya inzhenerov. "Tekhnosfera", 2012, s. 24 (A.V. Gurtov, R.N. Osaulenko. Solid State Physics for Engineers. "Tekhnosfera", 2012, P. 24)) **[10]**).

### Industrial Applicability

The present set may be used for both demonstration or training purposes and for studies aimed at comparative analysis of crystal structures of the existing materials and at producing new materials of crystalline structure, including one-dimensional crystals (with one growth orientation), such as carbon, silicon, boron-nitrogen, or other nanotubes.

The set may also be used for molecule modelling; therein, the following features are substituted with the features that are equivalent in view of the technical result to be achieved: the feature "crystal structure of a material" is substituted with the "molecular structure of a material", the feature "crystallographic plane" is substituted with the "isolated plane within the architecture of a molecule" (e.g., a plane of a cyclic element in a chemical compound), and the feature "elementary cell" is substituted with the feature "molecule" (for above equivalency, ref. to **[7]**, **[8]**). Furthermore, each of the three embodiments of the present set enables modeling, where one element, instead of simulating individual atoms or ions, is used to simulate groups of atoms or ions, in particular, the groups that comprise a molecule. A model of such type may adequately represent a crystal structure of ice characterized by relative positioning of the water molecules as a whole instead of the relative positioning of individual oxygen and hydrogen atoms (B. Kamb. Structure of ice VI. Science Nº150, 1965; p.p.205-209 **[11]**).

Finally, the set may be used for modeling not only crystal or other atomic and molecular structures, but also multiple other three dimensional objects, not necessarily naturally occurring: nuclear (nucleonic) structures, geometric bodies, including polyhedron vertex simulation, architectural objects, etc.

### References

**1.** Deane K. Smith. Bibliography on Molecular and Crystal Structure Models. U.S. department of commerce. National bureau of standards. National Bureau of Standards Monograph 14. Issued May 20, 1960.
**2.** Japanese Patent Application No. 2005-292392, published 20.10.2005.
**3.** V.M. Potapov. Stereokhimiya. Moskva, Izd. "Khimiya", 1988, p. 10-11 (Potapov, V.M. Stereochemistry. Moscow, Khimiya Publishing House, 1988, p. 10-11).
**4.** British Patent No. 1144851, published 12.03.1969.
**5.** Japanese Patent No.2642910, published 20.08.1997.
**6.** US Patent No.4014110, published 29.03.1977.
**7.** RF Utility Patent No. 119504, published 20.08.2012.
**8.** RF Invention Patent No.2494466, published 29.09.2013.
**9.** Postoyannyye Magnity. Spravochnik. Pod red. Yu.M. Pyatina. Moskva, "Energiya", 1980, 488 s. (Permanent Magnets. A Reference Book. Under the editorship of Yu.M. Pyatin. Moscow, Energiya, 1989, 488 pages
**10.** A.V. Gurtov, R.N. Osaulenko. Fizika tverdogo tela dlya inzhenerov. "Tekhnosfera", 2012, s. 24 (A.V. Gurtov, R.N. Osaulenko. Solid State Physics for Engineers. "Tekhnosfera", 2012, P. 24).
**11.** B. Kamb. Science Nº150, 1965; pp.205-209. Structure of ice VI.

## Claims

1. A set for crystal structure modeling, comprising: a base and one or more vertical posts to be installed on said base, and a kit of flat transparent constant-thickness plates to be installed on said posts, said plates simulating crystallographic planes of crystal structures to be modeled, each plate having holes at its edges for said posts in the number equal to the number of the posts; furthermore, the set comprises spacers to be installed on said posts between neighboring flat transparent plates and to provide, when assembling a model, for the arrangement of the plates in parallel to the base at the required distances from each other, and a plurality of differently sized and colored elements to simulate the atoms or ions included in crystal structures being modeled, each of the elements comprising a pair of spherical segments of the same size and color to be arranged symmetrically to each other at different sides of a flat transparent plate, **characterized in that** all flat transparent plates in the set are identical, one of each pair of sphere segments is configured as a permanent magnet or made from a non-magnetic material with a permanent magnet insert, while the other is made either entirely from a magnetically soft material, or as a permanent magnet, or from a non-magnetic material with a permanent magnet or magnetically soft material insert, the permanent magnets of both spherical segments having magnetization directions enabling a counter mutual orientation of the opposite poles of said magnets when arranging the spherical segments including them on a flat transparent plate, said set comprising a plurality of disks to form said spacers, said set further comprising templates in the number equal to the number of parallel crystallographic planes in the modeled crystal structures with outlines of the holes for the posts or outlines following, in full or in part, the shape of the flat transparent plates' edges marked on them, the templates further having unique template-specific marking that represents the required positioning of the spherical segments in accordance with relative positioning of the centers of atoms or ions in the modeled crystal structures' crystallographic planes, said set further comprising a felt-tip pen for copying said marking onto the flat transparent plates when the latter are superposed onto the templates such that the plates' edges or holes match the outlines on the templates.

2. The set of claim 1, **characterized in that** each of said inserts in a spherical segment, containing such insert, of an element, simulating atoms or ions forming part of the crystal structures being modeled, is located on the side of the spherical segment base flat surface and flush with the surface, and configured as a cylinder with an axis oriented along the radius of the spherical segment, which is perpendicular to the spherical segment base, the permanent magnet in an insert configured as a permanent magnet having an axial or a diametrical magnetization direction.

3. The set of claim **1** or **2, characterized in that** it comprises two posts.

4. The set of claim **1** or **2, characterized in that** all said disks have equal thickness.

5. The set of claim **4, characterized in that** it comprises two posts.

6. The set of claim **1** or **2, characterized in that** it comprises multiple kits of said disks, the disks in each kit being of equal thickness, the first kit including the disks of the smallest thickness, while the disks in each of the other kits have a thickness that is multiple of the disk thickness in the first kit, the multiplicity being different for different kits.

7. The set of claim **6, characterized in that** it comprises two posts.

8. The set of any of claims **1, 2, 5, 7, characterized in that** it further comprises a sponge for sponging off the marking lines drawn with the felt-tip pen.

9. The set of any of claims **1, 2, 5, 7, characterized in that** it further comprises another one or more bases and one or more posts configured for installing on each of the plates.

10. The set of claim **9, characterized in that** it further comprises a sponge for sponging off the marking lines drawn with the felt-tip pen.

11. A set for crystal structure modeling, comprising: a base and one or more vertical posts to be installed on said base, and a kit of flat transparent constant-thickness plates to be installed on said posts, said plates simulating crystallographic planes of crystal structures to be modeled, each plate having holes at its edges for said posts in the number equal to the number of the posts, the set further comprising spacers to be installed on said posts between neighboring flat transparent plates and to provide, when assembling a model, for the arrangement of the plates in parallel to the base at the required distances from each other, and a plurality of differently sized and colored elements to simulate the atoms or ions included in crystal structures being modeled, each of the elements comprising a pair of spherical segments of the same size and color to be arranged symmetrically to each other at different sides of a flat transparent plate, **characterized in that** all flat transparent plates in the set are identical, one of each pair of sphere segments is configured as a permanent magnet or made from a non-magnetic material with a permanent magnet insert or from a magnetically soft material, while the other is made either entirely from a magnetically soft material, or as a permanent magnet, or from a non-magnetic material with an insert configured as a permanent magnet, the permanent magnets of both spherical segments having magnetization directions enabling a counter mutual orientation of the opposite poles of said magnets when arranging the spherical segments including them on a flat transparent plate, said set comprising a plurality of disks to form said spacers, said set further comprising stencils in the number equal to the number of parallel crystallographic planes in the modeled crystal structures and made from a transparent film, the stencils being shaped and sized identically to the flat transparent plates and having a unique stencil-specific plurality of holes positioned in accordance with the relative positioning of the centers of atoms or ions in the modeled crystal structures' crystallographic planes and configured for installing in them said spherical segments at their flat surfaces after the stencil has been superposed onto the flat transparent plate.

12. The set of claim **11, characterized in that** each of said inserts in a spherical segment, containing such insert, of an element, simulating atoms or ions forming part of the crystal structures being modeled, is located on the side of the spherical segment base flat surface and flush with the surface, and configured as a cylinder with an axis oriented along the radius of the spherical segment, which is perpendicular to the spherical segment base, the permanent magnet in an insert configured as a permanent magnet having an axial or a diametrical magnetization direction.

13. The set of claim **11** or **12, characterized in that** it comprises two posts.

14. The set of claim **11** or **12, characterized in that** all said disks have equal thickness.

15. The set of claim **14, characterized in that** it comprises two posts.

16. The set of claim **11** or **12, characterized in that** it comprises multiple kits of said disks, the disks in each kit being of equal thickness, the first kit including the disks of the smallest thickness, while the disks in each of the other kits have a thickness that is multiple of the disk thickness in the first kit, the multiplicity being different for different kits.

17. The set of claim **16, characterized in that** it comprises two posts.

18. The set of any of claims **11, 12, 15, 17, characterized in that** said stencils have holes for the posts at the locations where the outlines of the holes are marked.

19. The set of any of claims **11, 12, 15, 17, characterized in that** it further comprises another one or more bases and one or more posts configured for installing on each of said plates.

20. The set of claim **19, characterized in that** said stencils have holes for the posts at the locations where the outlines of the holes are marked.

21. A set for crystal structure modeling, comprising: a base and one or more vertical posts to be installed on said base, and a kit of flat transparent constant-thickness plates to be installed on said posts, said plates simulating crystallographic planes of crystal structures to be modeled, each plate having holes at its edges for said posts in the number equal to the number of the posts, the set further comprising spacers to be installed on said posts between neighboring flat transparent plates and to provide, when assembling a model, for the arrangement of the plates in parallel to the base at the required distances from each other, and a plurality of differently sized and colored elements to simulate the atoms or ions included in crystal structures being modeled, each of the elements comprising a pair of spherical segments of the same size and color to be arranged symmetrically to each other at different sides of a flat transparent plate, **characterized in that** all flat transparent plates in the set are identical, one of each pair of sphere segments is configured as a permanent magnet or made from a non-magnetic material with a permanent magnet insert, while the other is made either entirely from a magnetically soft material, or as a permanent magnet, or from a non-magnetic material with a permanent magnet or magnetically soft material insert, the permanent magnets of both spherical segments having magnetization directions enabling a counter mutual orientation of the opposite poles of said magnets when arranging the spherical segments including them on a flat transparent plate, said set comprising a plurality of disks to form said spacers, said set further comprising transparencies made from a transparent film in the number equal to the number of parallel crystallographic planes in the modeled crystal structures and shaped and sized identically to said flat transparent plates, including the holes made in the latter for said posts, the transparencies having unique transparency-specific marking that represents the required positioning of the elements simulating atoms or ions according to the relative positioning of their centers in the modeled crystal structures' crystallographic planes.

22. The set of claim **21, characterized in that** each of said inserts in a spherical segment, containing such insert, of an element, simulating atoms or ions forming part of the crystal structures being modeled, is located on the side of the spherical segment base flat surface and flush with the surface, and configured as a cylinder with an axis oriented along the radius of the spherical segment, which is perpendicular to the spherical segment base, the permanent magnet in an insert configured as a permanent magnet having an axial or a diametrical magnetization direction.

23. The set of claim **21** or **22, characterized in that** it comprises two posts.

24. The set of claim **21** or **22, characterized in that** all said disks have equal thickness.

25. The set of claim **24, characterized in that** it comprises two posts.

26. The set of claim **21** or **22, characterized in that** it comprises multiple kits of said disks, the disks in each kit being of equal thickness, the first kit including the disks of the smallest thickness, while the disks in each of the other kits have a thickness that is multiple of the disk thickness in the first kit, the multiplicity being different for different kits.

27. The set of claim **26, characterized in that** it comprises two posts.

28. The set of any of claims **21, 22, 25, 27, characterized in that** it further comprises another one or more bases and one or more posts configured for installing on each of said plates.
